# EUROPÄISCHE PATENTANMELDUNG

(11) **EP 1 339 030 A1**
(43) Veröffentlichungstag der Anmeldung: **27.08.2003**
(21) Anmeldenummer: 02004421.0
(22) Anmeldetag: 26.02.2002
(51) Int. Cl.: G07F 19/00

(54) **Verfahren zum Authentifizierung eines Internetbenutzers**

(71) Anmelder: SIEMENS AKTIENGESELLSCHAFT, 80333 München (DE)
(72) Erfinder: Horn, Michael, 81739 München (DE)

(57) **Zusammenfassung**

Verfahren zur Authentifizierung eines Internetbenutzers über ein Daten- bzw. Telekommunikationsnetz bei der Registrierung bei einem Anbieter von Waren oder Dienstleistungen im Internet, wobei durch einen Datenaustausch eine eindeutige Zuordnung eines wählbaren Benutzernamens und Passwortes und der Mobile Subscriber ISDN Number (MSISDN) des Internetbenutzers zueinander hergestellt werden, mit denen dann eine eindeutige Authentifizierung des Nutzers bei der Registrierung gewährleistet ist.

## Beschreibung

Die Erfindung betrifft ein Verfahren zur Authentifizierung eines Internetbenutzers über ein Daten- bzw. Telekommunikationsnetz bei der Registrierung bei einem Anbieter von Waren oder Dienstleistungen im Internet.

In Zukunft sollen im Internet verstärkt Gebühren für kostenpflichtige Anwendungen wie Information, Entertainment etc. erhoben werden. Da Mobilfunktelefonbesitzer in der Regel auch PC-Benutzer sind, will man Ihnen die Abrechnung von Beträgen für die Nutzung von kostenpflichtigen Inhalten oder vom Einkaufen in E-Shops über bereits vorhandene Konten, wie Prepaid-Konten oder die Mobilfunktelefonrechnung (Postpaid), ermöglichen.

Hierzu wird bei einem bekannten Verfahren der im Internet surfende Benutzer eines Mobilfunktelefons bei der Nutzung von kostenpflichtigen Inhalten aufgefordert, seine Mobilfunknummer und seine in der Regel 4-stellige PIN einzugeben, wobei dann die Rechnungsbeträge mit der Mobilfunkrechnung abgerechnet werden.

Beim Einkaufen bis zu einer Höhe von 10 Euro, dem sogenannten "MicroPayment", wird im Internet ein Verfahren angewandt, bei dem der Benutzer im Besitz eines Girokontos sein muss. Zuerst muss der Benutzer seinen Namen, Adresse, Kontonummer und einen Benutzernamen mit Passwort angeben. Durch eine Probeüberweisung auf das Konto des Benutzers erhält dieser Geheimnummer, mit der er dann Benutzername und Passworts bestätigt. Bei einem Kauf erfolgt die Authentifizierung des Benutzers und die Autorisierung des Kaufs auf der Seite des Payment-Service-Providers, wobei der Rechnungsbetrag vom Kauf per Lastschriftverfahren eingezogen wird.

Beim Einkaufen im Internet bei Beträgen ab 10 Euro wird ein anderes Verfahren angewendet, das neben einem PC auch die Verfügbarkeit eines Mobiltelefons und einer Mobilfunkverbindung an Ort und Stelle voraussetzt. Beim Kauf gibt der Internetbenutzer seine Kontonummer sowie seine Mobilfunknummer an. Mittels einer SMS wird dann der Benutzer aufgefordert, die Bezahlung der ausgesuchten Ware zu autorisieren.

Bei einem weiteren Verfahren wird beim Einkaufen im Internet ebenfalls die Verfügbarkeit eines Mobiltelefons vorausgesetzt. Vorab werden Name, Adresse, Mobilfunktelefon- und Kontonummer des Benutzers hinterlegt, und dieser erhält eine SMS mit einer Geheimzahl zugesandt. Beim Kauf wird der Benutzer dann angerufen und aufgefordert, den Kauf durch Angabe der Geheimzahl zu bestätigen.

Die bisher bekannten Lösungen sind insofern noch in gewissen Sinne nachteilig, als z.B. beim ersten Verfahren unter Verwendung von Mobilfunknummer und PIN das Handy bei jedem Kauf (auch per Internet am PC) benötigt wird.

Das Verfahren für das Micro Payment hat zum Nachteil, dass es sehr kompliziert und nur für Beträge bis 10 Euro verwendet wird. Bei den anderen beiden Verfahren besteht ein Nachteil darin, dass der Internetbenutzer immer ein Mobilfunktelefon mit sich führen muss. Entsprechend muss auch ein Zugang zu einem Mobilfunknetz gewährleistet sein, und zudem entstehen gegebenenfalls hohe Kosten durch Airtime bzw. durch Roamingzuschlag im Ausland.

Der Erfindung liegt daher die Aufgabe zugrunde, den Stand der Technik dahingehend weiterzubilden, dass ein einfaches, ausreichend sicheres und kostengünstiges Verfahren zur Authentifizierung eines Internetbenutzers über ein Daten- bzw. Telekommunikationsnetz bei der Registrierung bei einem Anbieter von Waren oder Dienstleistungen im Internet zur Verfügung steht.

Diese Aufgabe wird durch ein Verfahren mit den Merkmalen des Anspruchs 1, des Anspruchs 6, des Anspruchs 9, des Anspruchs 13 oder des Anspruchs 16 gelöst.

Die Erfindung schließt den wesentlichen Gedanken ein, durch einen Datenaustausch über ein Daten- und/oder Telekommunikationsnetz eine eindeutige Zuordnung eines wählbaren Benutzernamens und Passwortes und der Mobile Subscriber ISDN Number (MSISDN) des Nutzers oder einem dieser entsprechenden Code-ID zueinander herzustellen, mit denen dann eine eindeutige Authentifizierung des Nutzers bei der Registrierung gewährleistet ist. Des weiteren stellt eine nur einmalige Benutzung eines Telekommunikations-Endgerätes im Zuge des erwähnten Datenaustauschs zum Empfangen einer einmalig verwendbaren Transaktionsnummer (TAN), die zur Autorisierung des Benutzernamens dient, einen wesentlichen Punkt der Erfindung dar.

Ein weiterer Gedanke der Erfindung betrifft die Authentifizierung eines Nutzers bei einem nachfolgenden Kauf von Waren oder Dienstleistungen im Internet allein an Hand seines Benutzernamens und seines Passworts und eine nachfolgende Zuordnung dieser zu seiner MSISDN. Dies schließt darüber hinaus den Gedanken ein, ein bereits vorhandenes Konto, das der MSISDN eindeutig zugeordnet ist, zu nutzen und dieses mit einem aus einem Kauf von Waren oder Dienstleistungen resultierenden Rechnungsbetrag zu belasten.

In einer ersten bevorzugten Ausführungsform des Verfahrens erfolgt der oben erwähnte Datenaustausch zur Authentifizierung bei der Neuregistrierung auf dem Daten-Server eines Anbieters von Waren und Dienstleistungen. Bei einem nachfolgenden Kauf kann nun vorteilhafterweise die Authentifizierung nur noch an Hand von Benutzernamen und Passwort erfolgen. Der Rechnungsbetrag wird bevorzugt vom Daten-Server des Anbieters zusammen mit der MSISDN des Internetbenutzers an den Daten-Server eines Payment-Service-Providers übertragen. Vom Daten-Server dieses Payment-Service-Providers erfolgt eine Übertragung von Rechnungsbetrag und MSISDN an den Daten-Server des entsprechenden Telekommunikationsnetzbetreibers. Alternativ kann auch eine direkte Übertragung vom Daten-Server des Anbieters zum Daten-Server des Telekommunikationsnetzbetreibers erfolgen. Auf dessen Daten-Server erfolgt auf Grund der MSISDN eine eindeutige Zuordnung zu einem bereits vorhandenen Konto, das mit dem Rechnungsbetrag belastet wird.

In einer weiteren Ausführungsform des Verfahrens erfolgt beim Versuch der Neuregistrierung auf dem Daten-Server eines Anbieters bevorzugt eine Weiterleitung von dort zu dem Daten-Server eines Telekommunikationsnetzbetreibers, wo dann der oben erwähnte Datenaustausch zur Festlegung der Parameter zur Authentifizierung erfolgt. Die eindeutige Authentifizierung des Internetbenutzer bei einem Kauf erfolgt bevorzugt nur an Hand von Benutzername und Passwort, die vom Daten-Server des Telekommunikationsnetzbetreibers an den Daten-Server des Anbieters übermittelt wurden. Bei einem Kauf werden diese nun zweckmäßigerweise zusammen mit dem entsprechenden Rechnungsbetrag vom Daten-Server des Anbieters an den Daten-Server des Telekommunikationsnetzbetreibers übermittelt. Auf dem letzteren erfolgt auf Grund der eindeutigen Zuordnung von Benutzernamen und Passwort zur MSISDN die erforderliche Authentifizierung, der zweckmäßigerweise eine Belastung des bereits vorhandenen Kontos mit dem Rechnungsbetrag folgt.

In einer dritten Ausführungsform erfolgt beim Versuch der Neuregistrierung auf dem Daten-Server des Anbieters von Waren und Dienstleistungen bevorzugt eine Weiterleitung von dessen Daten-Server zu dem Daten-Server eines Payment-Service-Providers, wo dann der oben beschriebene Datenaustausch zur Festlegung der Parameter zur Authentifizierung. Die eindeutige Authentifizierung des Internetbenutzer bei einem Kauf erfolgt nun bevorzugt nur noch an Hand von Benutzernamen und Passwort, die vom Daten-Server des Payment-Service-Providers an den Daten-Server des Anbieters übermittelt wurden. Bei einem Kauf werden diese nun zweckmäßigerweise zusammen mit dem entsprechenden Rechnungsbetrag vom Daten-Server des Anbieters an den Daten-Server des Payment-Service-Providers übermittelt. Nach Zuordnung von Benutzernamen und Passwort zur MSISDN erfolgt durch den Daten-Server des Payment-Service-Providers eine Weiterleitung von Rechnungsbetrag und MSISDN zum Daten-Server des Telekommunikationsnetzbetreibers, wo dann ein bereits vorhandenes, mit der MSISDN korrespondierendes Konto mit dem Rechnungsbetrag belastet wird.

Bei einer weiteren bevorzugten Ausführung findet bei der Neuregistrierung auf einem Daten-Server eines Anbieters von Waren oder Dienstleistungen zunächst eine Festlegung eines Benutzernamens mit vorangestellter Prüfung der Neuheit und nachfolgender Speicherung statt. Dann erfolgt zweckmäßigerweise zusammen mit einer Weiterleitung auch die Übermittelung des Benutzernamens an einen Daten-Server eines Telekommunikationsnetzbetreibers, worauf sich dann nachfolgend eine Übermittlung der MSISDN vom Datenendgerät des Internetbenutzers zum Daten-Server des Telekommunikationsnetzbetreibers anschließt.

Dort wird erfindungsgemäß eine zur MSISDN des Internetbenutzers eindeutig zugeordnete Code-ID und eine einmalig verwendbare Transaktionsnummer (TAN) erzeugt und vom Daten-Server des Telekommunikationsnetzbetreibers über ein Telekommunikationsnetz zum Telekommunikations-Endgerät des Internetbenutzers gesendet, wobei gleichzeitig die Code-ID, die Einmal-TAN und der Benutzernamen des Internetbenutzers vom Daten-Server des Telekommunikationsnetzbetreibers an den Daten-Server des Anbieters übermittelt werden.

Diese TAN dient zweckmäßigerweise zur Autorisierung des Benutzernamens des Internetbenutzers auf dem Daten-Server des Anbieters, der die Festlegung eines Passworts durch den Internetbenutzer erfolgt, wodurch Benutzernamen, Passwort und Code-ID des Internetbenutzers auf dem Daten-Server des Anbieters einander eindeutig zugeordnet und gespeichert werden.

Bei einem Kauf wird nun vorteilhafterweise die Code-ID zusammen mit dem entsprechenden Rechnungsbetrag vom Daten-Server des Anbieters an den Daten-Server des Telekommunikationsnetzbetreibers übermittelt. Auf Grund der eindeutigen Zuordnung von Code-ID zur MSISDN erfolgt auf den Daten-Server des Telekommunikationsnetzbetreibers eine Belastung eines zur MSISDN korrespondierenden Kontos mit dem Rechnungsbetrag.

Bei einer fünften Ausführungsform erfolgt bei der Neuregistrierung auf dem Daten-Server eines Anbieters zuerst die oben beschriebene Festlegung eines Benutzernamens. Dann erfolgt eine Weiterleitung zu einem Daten-Server eines Payment-Service-Providers, an den sich der oben beschrieben Datenaustausch zur Zuordnung von Benutzernamen, MSISDN und Code-ID und auf dem Daten-Server des Payment-Service-Providers bzw. der Zuordnung von Benutzernamen, Passwort und Code-ID auf dem Daten-Server des Anbieters anschließt.

Bei einem Kauf wird nun bevorzugt die Code-ID zusammen mit dem entsprechenden Rechnungsbetrag vom Daten-Server des Anbieters an den Daten-Server des Payment-Service-Providers übermittelt. Dort erfolgt eine Zuordnung von Code-ID zur MSISDN und es schließ sich eine Übertragung des Rechnungsbetrags zusammen mit der MSISDN an den Daten-Server des Telekommunikationsnetzbetreibers. Auf Grund der eindeutigen Zuordnung von Code-ID zur MSISDN erfolgt auf den Daten-Server des Telekommunikationsnetzbetreibers eine Belastung eines zur MSISDN korrespondierenden Kontos mit dem Rechnungsbetrag.

Weitere Aspekte der Erfindung ergeben sich aus den Unteransprüchen. Nachfolgend wird die Erfindung anhand von Ausführungsbeispielen beschrieben, die anhand von Abbildungen näher erläutert werden. Hierbei zeigen:
Fig. 1 ein Blockschaltbild einer ersten Ausführungsform der Erfindung,
Fig. 2 ein Blockschaltbild einer weiteren Ausführungsform der Erfindung,
Fig. 3 ein Blockschaltbild einer dritten Ausführungsform der Erfindung,
Fig. 4 ein Blockschaltbild einer weiteren Ausführungsform der Erfindung und
Fig. 5 ein Blockschaltbild einer fünften Ausführungsform der Erfindung.

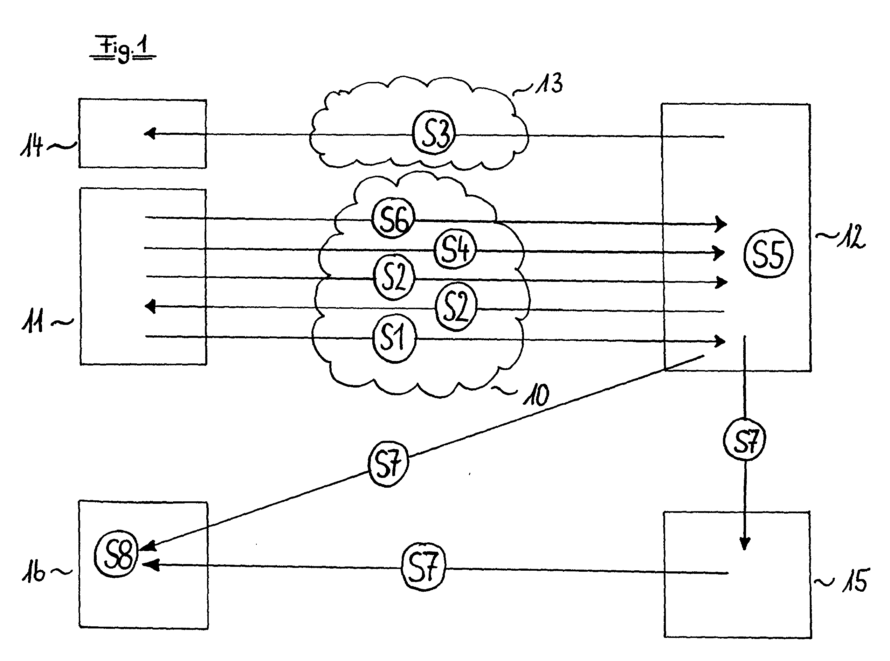

Fig. 1 beschreibt ein Verfahren, das bevorzugt für das sogenannte "MicroPayment", d.h. für Geldbeträge bis zu 10 Euro, z.B. für das Herunterladen von Musikstücken eingesetzt würde, aber natürlich auch für größere Geldbeträge geeignet ist. Im Schritt S1, wenn der Internetbenutzer im Internet 10 etwa bei einer Musikbörse ein Musikstück herunterladen will, wird er aufgefordert, seinen Benutzernamen und sein Passwort einzugeben oder auf den Link zur Neuregistrierung zu klicken. Ist der Internetbenutzer schon registriert, würde er durch Eingabe von Benutzernamen und Passwort authentifiziert und Zugang zur Seite erhalten und es würde mit Schritt S7 weitergehen. So erhält er aber im Schritt S2 bei der Registrierung eine Aufforderung, einen Benutzernamen zu wählen und diesen, sowie seine Mobilfunknummer einzugeben. Beide werden dann nachfolgend von seinem PC 11 zum Daten-Server 12 der Musikbörse übermittelt.

Nach Übermittlung der Daten wird in Schritt S3 vom Daten-Server 12 der Musikbörse über ein Mobilfunknetz 13 eine SMS zum Mobilfunktelefon 14 des Benutzers gesendet, die eine einmalig verwendbare Transaktionsnummer (TAN) enthält. Im Schritt S4 gibt der Internetbenutzer diese TAN und seinen Benutzernamen ein, wodurch er letzteren autorisiert und legt dann durch zweimaliges Eingeben sein Passwort fest. Auf dem Daten-Server 12 des Anbieters werden beim Schritt S5 Benutzername, Passwort und Mobilfunknummer gespeichert und sind nun einander eindeutig zugeordnet. Dieser Registrierungsvorgang wird einmalig durchgeführt, und die Daten stehen dann für beliebig viele Einkäufe zur Verfügung.

Vor dem Herunterladen des Musikstückes vom Daten-Server 12 der Musikbörse wird der Internetbenutzer dort im Schritt S6 allein durch seinen Benutzernamen und sein Passwort authentifiziert. Der Rechnungsbetrag für den Download wird auf dem Daten-Server 12 der Musikbörse im Schritt S7 durch Benutzernamen und Passwort eindeutig der Mobilfunknummer des Internetbenutzers zugeordnet und der Rechnungsbetrag zusammen mit der Mobilfunknummer an einen Daten-Server 15 eines Payment-Service-Providers übermittelt. Danach werden der Rechnungsbetrag und die Mobilfunknummer von dort an einen Daten-Server 16 des entsprechenden Mobilfunknetzbetreibers übertragen. Alternativ kann in einem modifizierten Schritt S7 auch eine direkte Übertragung von Rechnungsbetrag und Mobilfunknummer vom Daten-Server 12 der Musikbörse an den Daten-Server 16 des Mobilfunknetzbetreibers erfolgen. Schließlich wird im Schritt S8 auf dem Daten-Server 16 dieses Mobilfunknetzbetreibers ein der Mobilfunknummer zugeordnetes Konto mit dem Rechnungsbetrag belastet. Der resultierende Rechnungsbetrag kann dann, je nach Art des Kontos, z.B. im Lastschriftverfahren mit der Telefonrechnung oder aber auch von einem Prepaid-Guthaben abgebucht werden. Des weiteren könnte auch erst hier, sozusagen mit dem endgültigen Bezahlen, eine Freigabe der Ware aus S6 erfolgen, was aber voraussetzt, dass die Schritte ohne zeitlich Verzögerung direkt aufeinander abfolgen.

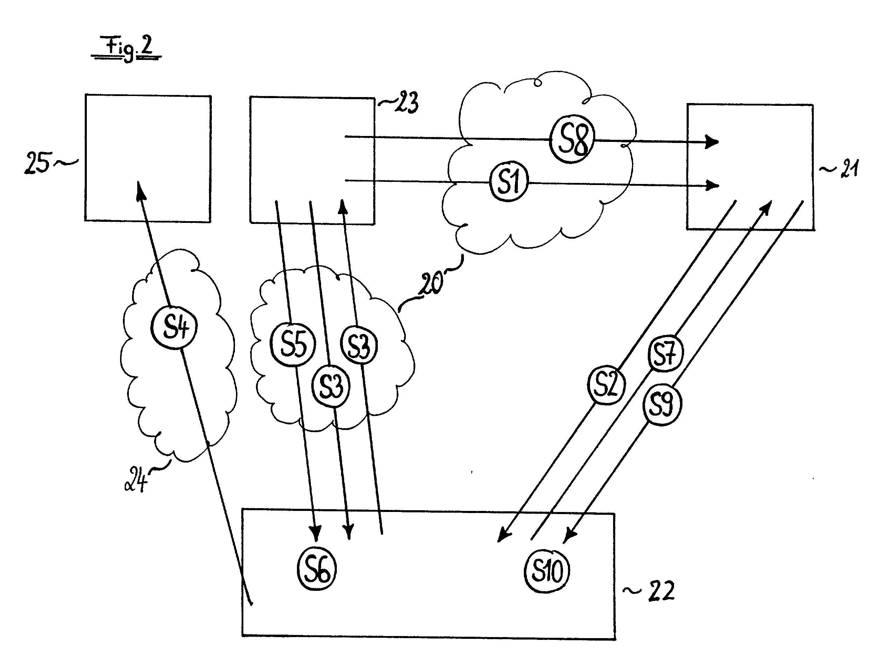

In Fig. 2 ist ein Verfahren für größere Kaufsummen dargestellt, das beim Einkaufen in einem E-Shop angewendet werden kann, das aber genauso für das Micro-Payment geeignet ist. Schritt S1 erfolgt in Analogie zu Fig. 1, im nachfolgenden Schritt S2 erfolgt beim Link zur Neuregistrierung nun aber eine Weiterleitung vom Daten-Server 21 des E-Shops zum Daten-Server 22 eines Mobilfunknetzbetreibers. Dort wird dann bei den Schritten S3 bis S6 ein den Schritten S2 bis S5 bei Fig. 1 entsprechender Datentransfer vorgenommen.

Durch Schritt S7 werden vom Daten-Server 22 des Mobilfunknetzbetreibers nun Benutzername und Passwort des Internetbenutzers an den Daten-Server 21 des E-Shops übertragen und dort gespeichert. Bei diesem Schritt ist es unerlässlich, die Übertragung über eine sichere Leistung gewährleisten, da sonst ein unberechtigter Dritter Zugang zu den Daten bekommen könnte und dies zu einem Missbrauch führen könnte. Bei einem Kauf z.B. einer Musik-CD wird bei Schritt S8 der Internetbenutzer auf dem Daten-Server 21 des E-Shops allein durch seinen Benutzernamen und sein Passwort eindeutig authentifiziert. Ein aus einem Kauf resultierender Rechnungsbetrag wird als Schritt S9 zusammen mit dem Benutzernamen und dem Passwort des Internetbenutzers vom Daten-Server 21 des E-Shops an den Daten-Server 22 des Mobilfunknetzbetreibers übertragen, wobei auch hier eine sichere Leitung vorausgesetzt wird. Im weiteren wird nun mit S10 analog zum Verfahren aus Fig. 1 verfahren.

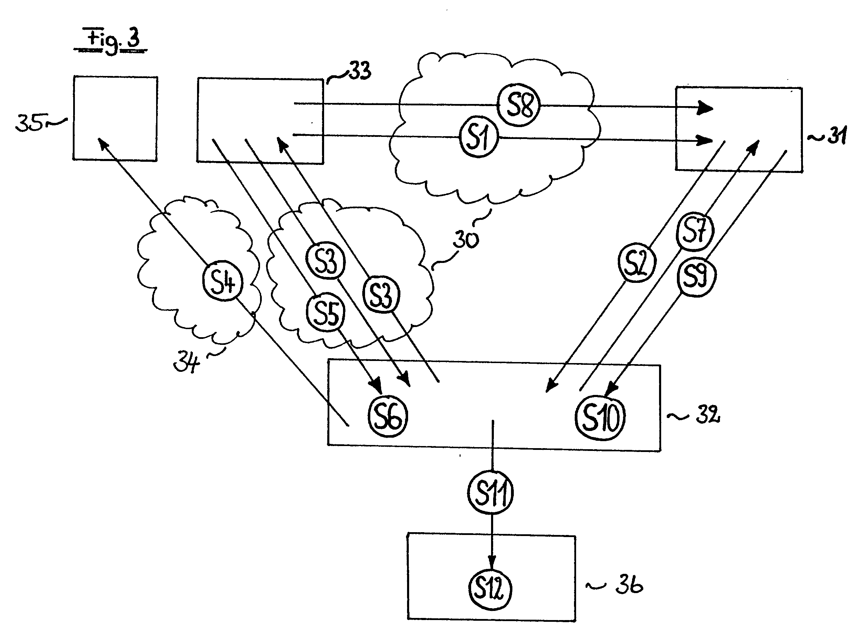

Fig. 3 stellt ebenfalls ein Verfahren für einen Einkauf mit größeren Beträgen bei einem E-Shop dar, aber auch mit der gleichen Eignung für das Micro-Payment. Schritt S1 verläuft analog zu Fig. 2, bei S2 erfolgt jedoch eine Weiterleitung zu einem Daten-Server 32 eines Payment-Service-Providers. In den Schritten S3 bis S6 erfolgt nun der bereits aus Fig. 2 bekannte Datenaustausch (auch S3 bis S6). Bei Schritt S7 werden nun vom Daten-Server 32 des Payment-Service-Providers Benutzername und Passwort des Internetbenutzers an den Daten-Server 31 des E-Shops über eine sichere Leitung übertragen und dort gespeichert.

Bei einem Kauf, hier als Schritt S8 bezeichnet, wird der Internetbenutzer auf dem Daten-Server 31 des E-Shops nun durch seinen Benutzernamen und sein Passworts eindeutig authentifiziert. Schritt S9 beinhaltet die Übertragung des Rechnungsbetrages über eine sichere Leistung zusammen mit dem Benutzernamen und Passwort des Internetbenutzers vom Daten-Server 31 des E-Shops an den Daten-Server 32 des Payment-Service-Providers. Dort wird nach Schritt S10, der eindeutigen Zuordnung des Rechnungsbetrag durch Benutzernamen und Passwort zur Mobilfunknummer des Internetbenutzers, in Schritt S11 der Rechnungsbetrag zusammen mit der Mobilfunknummer vom Daten-Server 32 des Payment-Service-Providers an den Daten-Server 36 des entsprechenden Mobilfunknetzbetreibers übertragen. Dort wird mit Schritt S12 ein analoger Vorgang zu Schritt S8 und den weiterführenden Vorgängen aus Fig. 1 durchgeführt.

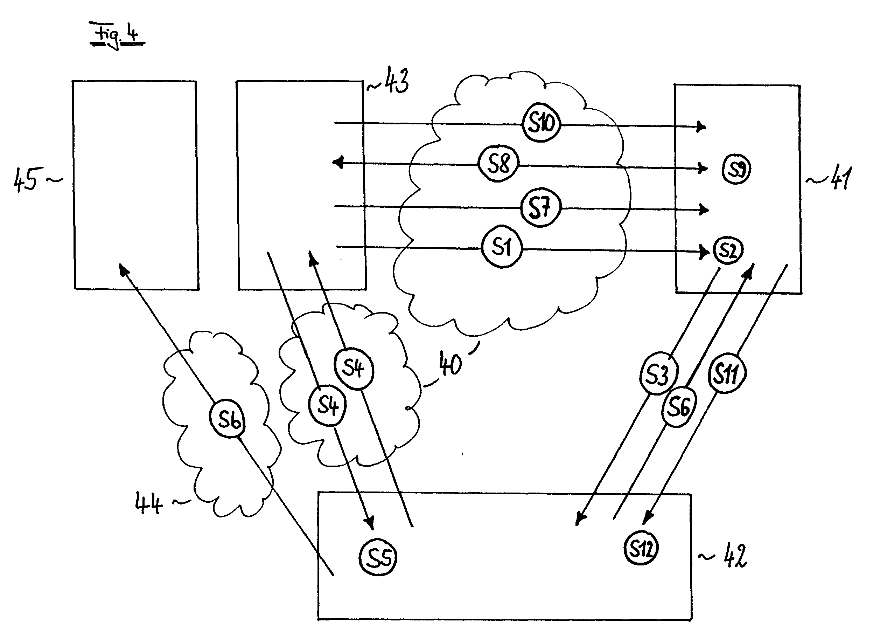

Fig. 4 beschreibt ein Verfahren, das sowohl für das sogenannte Micro-Payment als auch für größere Geldbeträge geeignet ist. Im Schritt S1, wenn der Internetbenutzer im Internet 40 etwa bei einem Internet-Buchhändler einkaufen will, wird er aufgefordert, seinen Benutzernamen und sein Passwort einzugeben oder auf den Link zur Neuregistrierung zu klicken. Ist er im Besitz von Benutzernamen und Passwort, so kann er sich durch deren Eingabe authentifizieren und eine angebotene Ware kaufen. Im Beispiel wählt der Internetbenutzer die Neuregistrierung und erhält eine Aufforderung, einen Benutzernamen zu wählen.

Im Schritt S2 wird auf dem Daten-Server 41 des Internet-Buchhändlers überprüft, ob der Benutzername schon vergeben ist. Wäre dies der Fall, müssten die Schritte S1 und S2 so lange wiederholt werden, bis ein freier Benutzername gefunden ist, der dann auf dem Daten-Server 41 gespeichert wird.

Nun erfolgt in einem Schritt S3 eine Weiterleitung an einen Daten-Server 42 eines Mobilfunknetzbetreibers, wobei auch der Benutzername des Internetbenutzers mit übertragen wird. Von dort ergeht dann an den Internetbenutzer die Aufforderung, seine Mobilfunknummer einzugeben, die dann im Schritt S4 vom seinem PC 43 aus an den Daten-Server 42 gesendet wird. Nach Übermittlung der Daten werden in Schritt S5 auf dem Daten-Server 42 eine einmalig verwendbare Transaktionsnummer(TAN) und eine Code-ID erzeugt, die der Mobilfunknummer eindeutig zugeordnet sind. Vom Daten-Server 42 wird im Schritt S6 über ein Mobilfunknetz 44 eine SMS zum Mobilfunktelefon 45 des Benutzers gesendet, die diese Einmal-TAN enthält. Gleichzeitig wird an den Daten-Server 41 des Internet-Buchhändlers die Code-ID und die TAN zusammen mit dem Benutzernamen des Internetbenutzers übertragen.

Im Schritt S7 übermittelt der Internetbenutzer von seinem PC 43 diese TAN und seinen Benutzernamen zur Autorisierung dessen an den Datenserver 41 des Internet-Buchhändlers und legt dann nachfolgend im Schritt S8 durch zweimaliges Eingeben sein Passwort fest. Auf dem Daten-Server 41 des Internet-Buchhändlers werden nun beim Schritt S5 Benutzername, Passwort und Code-ID gespeichert und sind nun einander eindeutig zugeordnet. Hiermit ist der einmalige Registrierungsvorgang beendet.

Beim Kauf eines Buches auf der Seite des Internet-Buchhändlers wird der Internetbenutzer im Schritt S10 allein durch seinen Benutzernamen und sein Passwort authentifiziert. Der Rechnungsbetrag für das Buch wird auf dem Daten-Server 41 des Internet-Buchhändlers durch Benutzernamen und Passwort eindeutig der Code-ID des Internetbenutzers zugeordnet und durch S11 zusammen mit der Code-ID an den Daten-Server 42 des Mobilfunknetzbetreibers übermittelt. Schließlich wird im Schritt S12 dort an Hand der Zuordnung von Code-ID und Mobilfunknummer ein der Mobilfunknummer zugeordnetes Konto mit dem Rechnungsbetrag belastet. Danach wird mit dem bereits in Fig. 1 angerissenen Vorgang nach S8 fortgefahren.

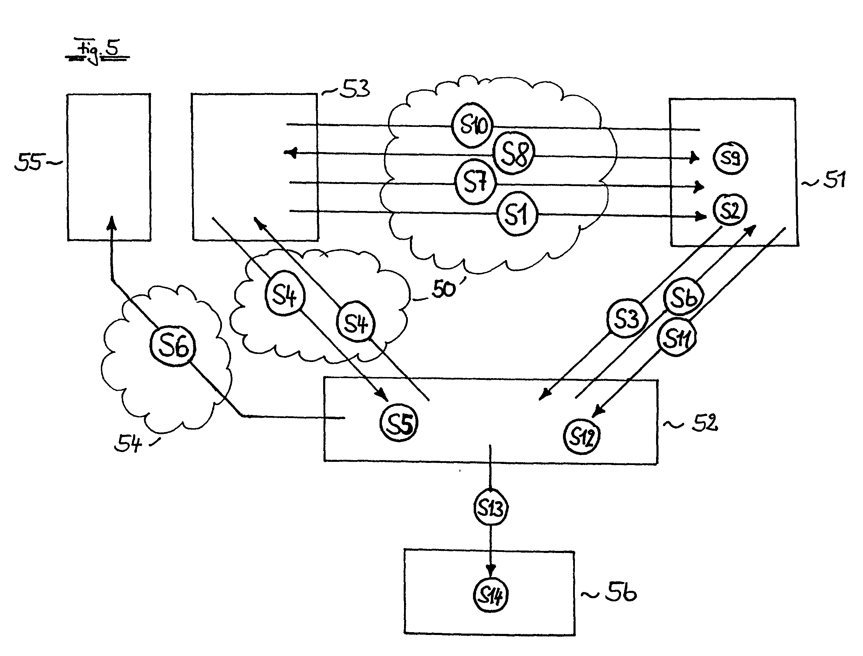

Bei Fig. 5 handelt es sich um ein Verfahren, das bei den verschiedensten Größenordnungen von Geldbeträgen benutzt werden kann. Die Bezugsziffern der Anordnungskomponenten sind an Fig. 4 angelehnt, und es wird hierzu auf die vorstehende Beschreibung verwiesen.

Die Schritte S1 und S2 verlaufen wie beim Verfahren aus Fig. 4, jedoch erfolgt nun bei S3 eine Weiterleitung zu einem Daten-Server 52 eines Payment-Service-Providers. Die nachfolgenden Schritte S4 bis S11 verlaufen analog zu Fig. 4 mit dem entsprechenden Datenaustausch zwischen Daten-Server 52 des Payment-Service-Providers, dem PC und dem Mobiltelefon des Internetbenutzers sowie dem Datenserver des E-Shops. Die Zuordnung des Rechnungsbetrages, der aus einem Kauf aus Schritt S10 resultiert, auf Grund von Benutzernamen und Code-ID zur Mobilfunknummer des Internetbenutzers auf dem Daten-Server 52 des Payment-Service-Providers erfolgt in Schritt S12. Dann wird in Schritt S13 der Rechnungsbetrag mit der Mobilfunknummer an den Daten-Server 56 des entsprechenden Mobilfunknetzbetreibers übermittelt, und mit Schritt S14 ein der Mobilfunknummer zugeordnetes Konto mit dem Rechnungsbetrag belastet sowie der weitere Vorgang gemäß Fig. 1 eingeleitet.

Die Ausführung der Erfindung ist nicht auf die oben dargestellten beispielhaften Beschreibungen beschränkt, sondern umfasst eine Vielzahl von Abwandlungen, die im Rahmen fachgemäßen Handelns liegen.

## Patentansprüche

**1.** Verfahren zur Authentifizierung eines Internetbenutzers über ein Daten- bzw. Telekommunikationsnetz bei der Registrierung bei einem Anbieter von Waren oder Dienstleistungen im Internet,
**dadurch gekennzeichnet, dass**
- bei der Neuregistrierung des Internetbenutzers bei einem Anbieter zunächst ein zur Authentifizierung dienender Benutzername und die MSISDN vom internetfähigen Datenendgerät (11) des Internetbenutzers zum Daten-Server (12) des Anbieters übermittelt wird,
- eine einmalig verwendbare Transaktionsnummer vom Daten-Server (12) des Anbieters über ein Telekommunikationsnetz (13) zum Telekommunikations-Endgerät (14) des Internetbenutzers gesendet wird,
- die Autorisierung des Benutzernamens durch Übermittlung der Transaktionsnummer vom Datenendgerät (11) des Internetbenutzers an den Daten-Server (12) des Anbieters vorgenommen wird und die Festlegung eines Passworts durch den Internetbenutzer erfolgt, worauf
- Benutzernamen, Passwort und MSISDN des Internetbenutzers auf den Daten-Server (12) des Anbieters gespeichert und einander eindeutig zugeordnet werden.

**2.** Verfahren nach Anspruch 1,
**dadurch gekennzeichnet, dass**
ein aus einem Kauf resultierender Rechnungsbetrag an Hand von Benutzernamen und Passwort des Internetbenutzers auf dem Daten-Server (12) des Anbieters eindeutig der MSISDN des Internetbenutzers zugeordnet wird.

**3.** Verfahren nach Anspruch 2,
**dadurch gekennzeichnet, dass**
der Rechnungsbetrag vom Daten-Server (12) des Anbieters zusammen mit der MSISDN des Internetbenutzers an einen Daten-Server (16) des entsprechenden Telekommunikationsnetzbetreibers übertragen wird.

**4.** Verfahren nach Anspruch 2,
**dadurch gekennzeichnet, dass**
der Rechnungsbetrag vom Daten-Server (12) des Anbieters zusammen mit der MSISDN des Internetbenutzers an einen Daten-Server (15) eines "Payment-Service-Providers" übertragen wird.

**5.** Verfahren nach Anspruch 4,
**dadurch gekennzeichnet, dass**
der Rechnungsbetrag vom Daten-Server (15) des Payment-Service-Providers zusammen mit der MSISDN des Internetbenutzers an einen Daten-Server (16) des entsprechenden Telekommunikationsnetzbetreibers übertragen wird.

**6.** Verfahren zur Authentifizierung eines Internetbenutzers über ein Daten- bzw. Telekommunikationsnetz bei der Registrierung bei einem Anbieter von Waren oder Dienstleistungen im Internet,
**dadurch gekennzeichnet, dass**
- bei der Neuregistrierung des Internetbenutzers mittels eines internetfähigen Datenendgerätes (23) bei einem Daten-Server (21) eines Anbieters von Waren oder Dienstleistungen zunächst eine Weiterleitung an einen Daten-Server (22) eines Telekommunikationsnetzbetreibers erfolgt und
- nachfolgend ein zur Authentifizierung dienender Benutzername und die MSISDN des Internetbenutzers vom Datenendgerät (23) zum Daten-Server (22) des Telekommunikationsnetzbetreibers übermittelt wird,
- eine einmalig verwendbare Transaktionsnummer vom Daten-Server (22) des Telekommunikationsnetzbetreibers über ein Telekommunikationsnetz (24) zum Telekommunikations-Endgerät (25) des Internetbenutzers gesendet wird,
- die Autorisierung des Benutzernamens durch Übermittlung der Transaktionsnummer vom Datenendgerät (23) des Internetbenutzers an den Daten-Server (22) des Telekommunikationsnetzbetreibers vorgenommen wird und die Festlegung eines Passworts durch den Internetbenutzer erfolgt, worauf
- Benutzernamen, Passwort und MSISDN des Internetbenutzers auf dem Daten-Server (22) des Telekommunikationsnetzbetreibers gespeichert und einander eindeutig zugeordnet werden, sowie
- der Benutzername und das Passwort des Internetbenutzers vom Daten-Server (22) des Telekommunikationsnetzbetreibers an den Daten-Server (21) des Anbieters übermittelt werden.

**7.** Verfahren nach Anspruch 6,
**dadurch gekennzeichnet, dass**
ein aus einem Kauf resultierender Rechnungsbetrag für den Kauf zusammen mit dem Benutzernamen und dem Passwort des Internetbenutzers vom Daten-Server (21) des Anbieters an den Daten-Server (22) des Telekommunikationsnetzbetreibers übertragen wird.

**8.** Verfahren nach Anspruch 7
**dadurch gekennzeichnet, dass**
dieser Rechnungsbetrag an Hand von Benutzernamen und Passwort des Internetbenutzers auf dem Daten-Server (22) des Telekommunikationsnetzbetreibers eindeutig der MSISDN zugeordnet wird.

**9.** Verfahren zur Authentifizierung eines Internetbenutzers über ein Daten- bzw. Telekommunikationsnetz bei der Registrierung bei einem Anbieter von Waren oder Dienstleistungen im Internet,
**dadurch gekennzeichnet, dass**
- bei der Neuregistrierung des Internetbenutzers mittels eines internetfähigen Datenendgerätes (33) bei einem Daten-Server (31) eines Anbieters von Waren oder Dienstleistungen zunächst eine Weiterleitung an einen Daten-Server (32) eines Payment-Service-Providers erfolgt und
- nachfolgend ein zur Authentifizierung dienender Benutzername und die MSISDN des Internetbenutzers vom Datenendgerät (33) zum Daten-Server (32) des Payment-Service-Providers übermittelt wird,
- eine einmalig verwendbare Transaktionsnummer vom Daten-Server (32) des Payment-Service-Providers über ein Telekommunikationsnetz (34) zum Telekommunikations-Endgerät (35) des Internetbenutzers gesendet wird,
- die Autorisierung des Benutzernamens durch Übermittlung der Transaktionsnummer vom Datenendgerät (33) des Internetbenutzers an den Daten-Server (32) des Payment-Service-Providers vorgenommen wird und die Festlegung eines Passworts durch den Internetbenutzer erfolgt, worauf
- Benutzernamen, Passwort und MSISDN des Internetbenutzers auf dem Daten-Server (32) des Payment-Service-Providers gespeichert und einander eindeutig zugeordnet werden, sowie
- der Benutzername und das Passwort des Internetbenutzers vom Daten-Server (32) des Payment-Service-Providers an den Daten-Server (31) des Anbieters übermittelt werden.

**10.** Verfahren nach Anspruch 9
**dadurch gekennzeichnet, dass**
ein aus einem Kauf resultierender Rechnungsbetrag zusammen mit dem Benutzernamen und dem Passwort des Internetbenutzers vom Daten-Server (31) des Anbieters an den Daten-Server (32) des Payment-Service-Providers übertragen wird.

**11.** Verfahren nach Anspruch 10
**dadurch gekennzeichnet, dass**
dieser Rechnungsbetrag an Hand von Benutzernamen und Passwort des Internetbenutzers auf dem Daten-Server (32) des Payment-Service-Providers eindeutig der MSISDN des Internetbenutzers zugeordnet wird.

**12.** Verfahren nach Anspruch 11
**dadurch gekennzeichnet, dass**
der Rechnungsbetrag vom Daten-Server (32) des Payment-Service-Providers zusammen mit der MSISDN des Internetbenutzers an den Daten-Server (36) des entsprechenden Telekommunikationsnetzbetreibers übertragen wird.

**13.** Verfahren zur Authentifizierung eines Internetbenutzers über ein Daten- bzw. Telekommunikationsnetz bei der Registrierung bei einem Anbieter von Waren oder Dienstleistungen im Internet,
**dadurch gekennzeichnet, dass**
- bei der Neuregistrierung des Internetbenutzers mittels eines internetfähigen Datenendgerätes (43) bei einem Daten-Server (41) eines Anbieters von Waren oder Dienstleistungen zunächst eine Festlegung eines Benutzernamens erfolgt, , wobei
- zuvor der Benutzername darauf überprüft wurde, ob er schon vorhanden ist, und nachfolgend eine Speicherung dessen auf dem Daten-Server (51) stattfindet,
- dann erfolgt eine Weiterleitung an einen Daten-Server (42) eines Telekommunikationsnetzbetreibers , wobei gleichzeitig auch der Benutzername des Internetbenutzers übermittelt wird,
- dann nachfolgend die MSISDN des Internetbenutzers vom Datenendgerät (43) zum Daten-Server (42) des Telekommunikationsnetzbetreibers übermittelt wird,
- wo eine der MSISDN des Internetbenutzers eindeutig zugeordnete Code-ID erzeugt wird, und
- eine einmalig verwendbare Transaktionsnummer vom Daten-Server (42) des Telekommunikationsnetzbetreibers über ein Telekommunikationsnetz (44) zum Telekommunikations-Endgerät (45) des Internetbenutzers gesendet wird,
- wobei gleichzeitig die Code-ID, die Transaktionsnummer und der Benutzernamen des Internetbenutzers vom Daten-Server (42) des Telekommunikationsnetzbetreibers an den Daten-Server (41) des Anbieters übermittelt werden,
- die Autorisierung des Benutzernamens durch Übermittlung der Transaktionsnummer vom Datenendgerät (43) des Internetbenutzers an den Daten-Server (41) des Anbieters vorgenommen wird und die Festlegung eines Passworts durch den Internetbenutzer erfolgt, worauf
- Benutzernamen, Passwort und Code-ID des Internetbenutzers auf dem Daten-Server (21) des Anbieters einander eindeutig zugeordnet und gespeichert werden.

**14.** Verfahren nach Anspruch 13,
**dadurch gekennzeichnet, dass**
ein aus einem Kauf resultierender Rechnungsbetrag zusammen mit der Code-ID des Internetbenutzers vom Daten-Server (41) des Anbieters an den Daten-Server (42) des Telekommunikationsnetzbetreibers übertragen wird.

**15.** Verfahren nach Anspruch 14,
**dadurch gekennzeichnet, dass**
dieser Rechnungsbetrag an Hand von Code-ID des Internetbenutzers auf dem Daten-Server (42) des Telekommunikationsnetzbetreibers eindeutig der MSISDN zugeordnet wird.

**16.** Verfahren zur Authentifizierung eines Internetbenutzers über ein Daten- bzw. Telekommunikationsnetz bei der Registrierung bei einem Anbieter von Waren oder Dienstleistungen im Internet,
**dadurch gekennzeichnet, dass**
- bei der Neuregistrierung des Internetbenutzers mittels eines internetfähigen Datenendgerätes (53) bei einem Daten-Server (51) eines Anbieters von Waren oder Dienstleistungen zunächst eine Festlegung eines Benutzernamens erfolgt, wobei
- zuvor der Benutzername darauf überprüft wurde, ob er schon vorhanden ist, und
- nachfolgend eine Speicherung dessen auf dem Daten-Server (51) stattfindet,
- dann erfolgt eine Weiterleitung an einen Daten-Server (52) eines Payment-Service-Providers, wobei gleichzeitig auch der Benutzername des Internetbenutzers übermittelt wird,
- dann nachfolgend die MSISDN des Internetbenutzers vom Datenendgerät (53) zum Daten-Server (52) des Payment-Service-Providers übermittelt wird,
- auf diesem eine Code-ID erzeugt wird, die zusammen mit Benutzernamen und MSISDN des Internetbenutzers auf dem Daten-Server (52) des Payment-Service-Providers gespeichert und einander eindeutig zugeordnet werden,
- dann eine einmalig verwendbare Transaktionsnummer vom Daten-Server (52) des Payment-Service-Providers über ein Telekommunikationsnetz (54) zum Telekommunikations-Endgerät (55) des Internetbenutzers gesendet wird,
- wobei gleichzeitig die Code-ID, die Transaktionsnummer und der Benutzernamen des Internetbenutzers vom Daten-Server (52) des Payment-Service-Providers an den Daten-Server (51) des Anbieters übermittelt werden,
- die Autorisierung des Benutzernamens durch Übermittlung der Transaktionsnummer vom Datenendgerät (53) des Internetbenutzers an den Daten-Server (51) des Anbieters vorgenommen wird und die Festlegung eines Passworts durch den Internetbenutzer erfolgt, worauf
- Benutzernamen, Passwort und Code-ID des Internetbenutzers auf dem Daten-Server (51) des Anbieters einander eindeutig zugeordnet und gespeichert werden.

**17.** Verfahren nach Anspruch 16,
**dadurch gekennzeichnet, dass**
ein aus einem Kauf resultierender Rechnungsbetrag zusammen mit der Code-ID des Internetbenutzers vom Daten-Server (51) des Anbieters an den Daten-Server (52) des Payment-Service-Providers übertragen wird.

**18.** Verfahren nach Anspruch 17,
**dadurch gekennzeichnet, dass**
dieser Rechnungsbetrag an Hand der Code-ID des Internetbenutzers auf dem Daten-Server (52) des Payment-Service-Providers eindeutig der MSISDN zugeordnet wird.

**19.** Verfahren nach Anspruch 18,
**dadurch gekennzeichnet, dass**
der Rechnungsbetrag vom Daten-Server (52) des Payment-Service-Providers zusammen mit der MSISDN des Internetbenutzers an den Daten-Server (56) des entsprechenden Telekommunikationsnetzbetreibers übertragen wird.

**20.** Verfahren nach einem der Ansprüche 3, 5, 8, 12, 15 oder 19
**dadurch gekennzeichnet, dass**
auf dem Daten-Server (16; 22; 36; 42; 56) dieses Telekommunikationsnetzbetreibers ein der MSISDN zugeordnetes Konto mit dem Rechnungsbetrag belastet wird.

**22.** Verfahren nach einem der vorhergehenden Ansprüche,
**dadurch gekennzeichnet, dass**
bei einem Kauf von Waren oder Dienstleistungen durch den Internetbenutzer die Authentifizierung auf dem Daten-Server (12; 21; 31; 41; 51) des Anbieters an Hand des Benutzernamens und des Passworts erfolgt.
